# EUROPÄISCHE PATENTSCHRIFT

(11) **EP 1 541 023 B1**
(45) Veröffentlichungstag und Bekanntmachung des Hinweises auf die Patenterteilung: **10.01.2007**
(21) Anmeldenummer: 04028203.0
(22) Anmeldetag: 27.11.2004
(51) Int. Cl.: A01N 37/44

(54) **Biozid-wirksame Kombination für landwirtschaftliche Anwendungen**
Biocidally active combination for agricultural applications
Combinaison ayant une activité biocide pour des applications agricoles

(30) Priorität: 10.12.2003 DE 10357682
(43) Veröffentlichungstag der Anmeldung: 15.06.2005
(73) Patentinhaber: Goldschmidt GmbH, 45127 Essen (DE)
(72) Erfinder: Fleute-Schlachter, Ingo, Dr., 45277 Essen (DE); Sieverding, Ewald, Dr., 55578 St. Johann (DE); Windbiel, Gerd, 45289 Essen (DE)

(56) Entgegenhaltungen:
- EP-A- 0 274 369
- EP-A- 0 483 095
- EP-A- 0 560 114
- EP-A- 0 597 488
- DE-A1- 2 020 349
- US-A- 5 912 209
- US-A- 6 083 876

## Beschreibung

Die Erfindung betrifft eine biologisch wirksame Kombination für landwirtschaftliche Anwendungen, bestehend aus mindestens einem bioziden, landwirtschaftlich annehmbaren Wirkstoff und einem Betain als Bioaktivator für die Wirksubstanz.

In landwirtschaftlichen, gärtnerischen und forstwirtschaftlichen Kulturen werden durch Mikroorganismen, Insekten und Wildwuchs von unerwünschten Pflanzen zum Teil immense Schäden verursacht, so z. B. durch Beeinträchtigungen des Wachstums der Kulturen, Schädigung des Erntegutes bzw. Auftreten von Ernteverlusten, Qualitätsminderung durch Fraßschäden, Verderb gelagerter Früchte und Kontaminationen von Geräten.

Durch gezielte Anwendung von spezifischen biologisch aktiven Wirkstoffen wie beispielsweise Pestiziden, Herbiziden, Fungiziden, Insektiziden, Akariziden, Moluskiziden, Viridiziden und dergleichen werden solche Beeinträchtigungen verhindert bzw. verringert oder eingeschränkt.

Durch Pilzbefall wird eine Vielzahl von Krankheiten an Kulturpflanzen hervorgerufen. Andererseits können auch Bakterien Krankheiten an Kulturpflanzen auslösen.

Kulturpflanzen werden an allen Pflanzenteilen, inklusive geernteten Bestandteilen, durch Insektenfraß geschädigt.

Um das Wachstum von sogenannten Unkräutern oder Ungräsern, des unerwünschten Begleitwuchses, in landwirtschaftlich angebauten Kulturen, im Garten- und Zierpflanzenbau und der Forstwirtschaft zu mindern, werden Herbizide eingesetzt.

Insbesondere Glyphosat (N-(Phosphonomethyl)glycin) und Glufosinat sowie deren Derivate haben als sogenannte Totalherbizide und als Begleitwuchsregulatoren, bzw. Pflanzenwachstumsregulatoren breite Anwendung gefunden.

Es gibt, als Stand der Technik, eine Reihe von Publikationen, die sich mit Glyphosat und dessen diversen Salzen sowie der Verwendung als Herbizid und als Pflanzenwachstumsregulator beschäftigen: US 3,799,758; US 4,315,765; US 4,481,026 und US 4,405,531.

Eine verbesserte herbizide Wirkung durch die Mitverwendung von Tensiden wurde bereits früh beobachtet und untersucht. J.B. Wyrill und O.C. Burnside diskutieren in "Glyphosate toxicity to common milkweed and hamp dogbane as influenced by surfactants" in Weed Science, Vol. 25, 1977, Seiten 275 - 287, eine Reihe von nicht-ionischen und kationischen Tensiden.

Als Resultat stellen sie fest, dass Amingruppen enthaltende Tenside die beste Effektivität aufweisen und diese nochmals mit steigendem HLB-Wert und steigendem Ethoxylierungsgrad verbessert werden. Es wird gesagt, dass, ungeachtet dessen, der chemischen Struktur einer Verbindung eine gleiche oder größere Bedeutung zukommt, wobei Struktur und Wirkung keinesfalls vorhersehbar sind.

Eine Anzahl von Vorschlägen sind bekannt, die sich mit der Kombination von Glyphosaten und Tensiden befassen: US 5,710,104 beschreibt die Kombination aus Glyphosat und polyethoxylierten primären Monoalkoholen. US 5,668,085 lehrt die Kombination aus Glyphosat und alkoxylierten Aminen. US 5,464,807 offenbart die Kombination aus Glyphosat und alkoxylierten quartären Ammoniumverbindungen.

Die EP-A-0 483 095 beschreibt die Kombination aus Glyphosat, einem Silicon-Copolymer als Netzmittel und einem kationischen oder amphoteren Tensid (Trialkylbetain), die zu einer lagerstabilen Mischung führen sollen.

WO-A-99/45780 beschreibt eine Mischung dreier Herbizide in einer Suspoemulsion, die einen Emulgator, eine wässrige und eine Öl-Phase enthält. Als Emulgator kann ein amphoteres Tensid verwendet werden.

US 5,912,209 beschreibt eine Formulierung von Glyphosat mit einem sekundären Alkohol und einem anderen Tensid, das ein Betain (Trialkylbetain) sein kann.

WO-A-97/47196 beschränkt sich bei der Auswahl der Betaine ebenfalls auf Trialkylderivate, die zur Verbesserung der Wirkung von Herbiziden eingesetzt werden können. Um eine ausreichende Wasserlöslichkeit zu gewährleisten, sind nur Derivate kurzkettiger Aminosäuren geeignet.

Die Lehre der EP-B-0 597 488 betrifft ein Verfahren zum Verstärken der Wirksamkeit von Agrochemikalien (= biozid-wirksame Substanzen) durch spezifische quartäre Ammoniumverbindungen
- Formel (I) =: quartäre Diamid-ammoniumverbindungen (Seite 7, Zeilen 29-36);
- Formel (II) =: H/Alkyl-(Diamid, Ester/Amid, Diester)-ammoniumverbindungen (Seite 7, Abs. 0022);
- Formel (III) =: quartäre Dialkyl-(Ester/Amid)-ammoniumverbindungen /Seite 7, Abs. 0024)
und optional zusätzliche Tenside wie ionische, nichtionische oder amphotere Tenside, wobei Armox C/12 als Lauryldimethylaminoxid, Monaterics und Miranols als Aminoxide sowie Betain und Lonzaine® (funktionalisierte Betaine der Firma Lonza) genannt sind (Seite 8, Abs. 0028).

Die bekannten Wirkstoffkombinationen weisen hinsichtlich ihrer Anwendungseigenschaften in der Praxis oftmals Mängel auf, sie haben z. B. eine komplexe Zusammensetzung, mangelnde Lagerbeständigkeit, ungenügende Breitenwirkung und/oder zu geringe Wirksamkeit.

Flüssige Formulierungen weisen oft eine so geringe Viskosität auf, dass deren Handhabung erschwert ist. Beim Einfüllen in Sprühvorrichtungen kann es dann durch Verdriften leicht zu gefährlichen Situationen kommen, wobei Tropfen unbeabsichtigt auf Körperteile des Anwenders landen und Schaden anrichten. Zur Vermeidung werden daher für manche Anwendungen Verdicker eingesetzt.

Allgemein liegt der Erfindung die Aufgabe zugrunde, die sich aus dem Stand der Technik gegebenen Nachteile zu überwinden.

Ferner besteht die erfindungsgemäße Aufgabe darin, eine Zusammensetzung anzugeben, mit deren Hilfe die Wirksamkeit von Wirkstoffen gesteigert und so die Einsatzkonzentration dieser Wirkstoffe vermindert werden kann.

Eine weitere erfindungsgemäße Aufgabe bestand darin, die Pflanzenverfügbarkeit von Wirkstoffen unter Verwendung von Additiven als Bioaktivatoren zu verbessern.

Zusammengefasst besteht die Aufgabe der vorliegenden Erfindung darin, ein Additiv bereitzustellen, das die biologische Aktivität von bioziden Wirkstoffen in einer einfachen Mischung verstärkt, eine gute Verträglichkeit aufweist, keine irritierende Wirkung auf den menschlichen Körper hat und neben einer Breitenwirkung bei reduzierten Anwendungskonzentrationen ausgezeichnete Wirkung aufweist.

Diese Aufgabe wird durch die Kombination eines bioziden Wirkstoffs und einer wirksamen Menge mindestens eines Betains der allgemeinen Formel (I) gelöst.

Ein Gegenstand der Erfindung sind daher biologisch wirksame Kombinationen für landwirtschaftliche Anwendungen, bestehend aus
A) mindestens einem bioziden, landwirtschaftlich annehmbaren Wirkstoff und
B) einem Bioaktivator für die Wirksubstanz gemäß A) und
C) gegebenenfalls üblichen Hilfs- und Zusatzstoffen,
welche dadurch gekennzeichnet sind, dass als Bioaktivator B) mindestens eine Verbindung der allgemeinen Formel (I)

R-C(O)NH- (CH₂)ₐ-N⁺ (R¹, R²) - (CH₂)_{b}-COO⁻ (I)

worin bedeuten
- R: ein gegebenenfalls verzweigter und/oder Mehrfachbindungen und/oder funktionelle Gruppen enthaltender Kohlenwasserstoffrest mit 6 bis 22 C-Atomen, vorzugsweise 8 bis 18 und insbesondere 10 bis 14 C-Atomen,
- R¹, R²: unabhängig voneinander C₁₋₄-Alkylreste, insbesondere -CH₃,
- a: 1 bis 5, vorzugsweise 2 oder 3,
- b: 1 oder 2
in wirksamer Konzentration mitverwendet wird.

Ein weiterer Gegenstand der Erfindung ist ein Verfahren zur Verstärkung der Aktivität von wässrigen bioziden Zusammensetzungen für landwirtschaftliche Anwendungen, enthaltend einen bioziden, landwirtschaftlich annehmbaren Wirkstoff, gegebenenfalls übliche Hilfs- und Zusatzstoffe und einen Bioaktivator, welcher dadurch gekennzeichnet ist, dass er eine wirksame Menge mindestens einer Verbindung der allgemeinen Formel (I)

R-C(O)NH- (CH₂)ₐ-N⁺ (R¹, R²) - (CH₂)_{b} - COO⁻ (I)

enthält, worin die einzelnen Indices die oben angegebene Bedeutung haben.

Ein weiterer Gegenstand der Erfindung sind wässrige lagerstabile Biozidzusammensetzungen mit verbesserter biozider Aktivität, enthaltend 0,05 bis 50 Gew.-% eines landwirtschaftlich annehmbaren Biozids, ausgewählt aus der Gruppe der Herbizide oder Pflanzenwachstumsregulatoren und 0,5 bis 50 Gew.-% eines Bioaktivators der allgemeinen Formel (I)

R-C(O)NH- (CH₂)ₐ-N⁺ (R¹, R²) - (CH₂)_{b}-COO⁻ (I)

worin die einzelnen Indices die oben angegebene Bedeutung haben.

Ein weiterer Gegenstand der Erfindung ist ein Verfahren zur Behandlung von Pflanzen, welches das Aufbringen einer wässrigen Biozidzusammensetzung gemäß den Ansprüchen 1 bis 5 auf die Pflanzen umfasst.

Ein weiterer Gegenstand der Erfindung ist die Erhöhung der Viskosität von wässrigen Biozidzusammensetzungen mit erfindungsgemäßen Substanzen. Solche Zusammensetzungen bedürfen keines Zusatzes eines Verdickers mehr.

Weitere Gegenstände der Erfindung sind durch den Inhalt der Patentansprüche gekennzeichnet.

Die Bioaktivatoren im Sinne der vorliegenden Erfindung können generell auch mit allen Wirkstoffen im gewerblichen Bereich und in nicht landwirtschaftlich genutzten Arealen zur Wirkungsverstärkung konzentriert mit den Wirkstoffen formuliert werden, bevor sie auf anwendungsübliche Konzentration verdünnt und appliziert werden.

Die Formulierung kann auch bevorzugt im Tank selbst hergestellt werden, indem Bioaktivator und Wirkstoffe, sowie gegebenenfalls auch andere Hilfsstoffe, einem Wassertank separat zugeführt und vermischt werden, bevor sie appliziert, d. h. vorzugsweise versprüht werden. Die Reihenfolge der Zugabe der Bestandteile spielt dabei keine Rolle. Die Konzentration des Wirkstoffes ist diejenige, die üblicherweise für die Erzielung des gewünschten Effektes durch den Wirkstoff eingesetzt wird, üblicherweise in einer Konzentration von 0,0001 bis max. 50 Gew.-%, bevorzugt in einer Konzentration von 0,01 bis 10 Gew.-%.

Die Herstellung der erfindungsgemäßen Bioaktivatoren ist in EP-B-0 560 114 beschrieben und wird hiermit als Referenz eingeführt.

Bioaktivatoren im Sinne des Patentes sind solche, die die biologische Wirksamkeit von Wirkstoffen über die Verbesserung des Aufnahmevermögens in das pflanzliche Gewebe oder in die Zieloberfläche erhöhen. Die Bioaktivation kann auch durch eine auf der Zieloberfläche verbesserte biologische Verfügbarkeit von Wirkstoff oder Wirkstoffen für Organismen erzielt werden. Dadurch wird eine verbesserte biologische Aktivität des oder der Wirkstoffe in und/oder auf den behandelten Zielen ermöglicht. Bei den durch Bioaktivatoren verstärkt wirksamen Bioziden handelt es sich bevorzugt um landwirtschaftlich annehmbare Wirkstoffe. Es werden aber Wirkstoffe, die im nicht-landwirtschaftlichen Bereich zum Schutz gegen Insekten, Krankheiten, unerwünschte Pflanzen und dergleichen, sowie zum Schutz gegen Bakterien, Viren, Schnecken, Muscheln, Tiere und dergleichen, verwendet werden, nicht ausgeschlossen.

Landwirtschaftlich annehmbare Wirkstoffe sind solche, die in den einzelnen Ländern der Welt als solche zugelassen sind, für deren Anwendung zum Schutz der Pflanze oder zur Verhinderung von Schaden auf Kulturpflanzen oder Materialien. Es kann sich dabei sowohl um synthetische Wirkstoffe, wie auch Wirkstoffe auf biologischer Basis handeln, wobei sowohl Extrakte, wie auch antagonistisch wirkende, lebende Organismen gemeint sein können.

Als landwirtschaftlich annehmbare Wirkstoffe kommen Akarizide (AC), Algizide (AL), Attractantien (AT), Reppelentien (RE) Bakterizide (BA), Fungizide (FU), Herbizide (HB), Insektizide (IN), Molluskizide (MO), Nematizide (NE), Rodentizide (RO), Safener (SA), Sterilantien (ST), Synergentien (SY), Virizide (VI) Wachstumsregulatoren (PG) allein oder in Kombination in Betracht. Hierunter sind HB, FU, IN, NE, AC oder PG bevorzugt und HB, FU, IN besonders bevorzugt.

Gemäß einer bevorzugten Ausführungsform werden unter dem Begriff Wirkstoffe alle dem Fachmann bekannten und geeigneten Wirkstoffe verstanden.

Wirkstoffklassen, Wirkstoffverbindungen oder Organismen als biozide, landwirtschaftlich annehmbare Wirkstoffe zusammen mit ihrer Verwendung bzw. ihren Verwendungen sind beispielsweise aufgelistet in dem Handbuch "The Pesticide Manual", 12^{th} edition 2002, The British Crop Protection Council, und dort weitere zitierte Literaturangaben.

Eine Auswahl, aber nicht beschränkt auf diese, sind für AC beispielhaft: Abamectin, Bromocyclen, Clofentezin, Diazinon, Tebufenpyrad; für AL beispielhaft: Dichlorophen; für AT beispielhaft: 3,7-Dimethyl-2,6-octadien-1-ol; für RE beispielhaft: Anthraquinon, Citronellol, Daphneöl, Guazatin, Sebazinsäure; für BA beispielhaft: Streptomycin, Propionsäure, Pentylphenol, Dichlorophen; für FU beispielhaft: Epoxiconazole, Fenpropidine, Azoxystrobin, Mancozeb, Carbendazim, Fenhexamid, Schwefel, Carpropamid; für HB beispielhaft: Atrazine, Bentazone, Dicamba, Glufosinat inclusive dessen Salze, Glyphosat inklusive dessen Salze und Derivate, Glufosinat inklusive dessen Salze und Derivate, Metamitron, Metalachlor, Nicosulfuron, Paraquat, Picolinafen, Pendimethalin, Rimsulfuron, Quinclorac; für IN beispielhaft: Acetamiprid, Cypermethrin, Imidacloprid, Pirimicarb, Spinosad; für MO beispielhaft: Ethanol, Thiodicarb, Metaldehyde, MCPA-thiethyl, Aluminiumsulfat; für NE beispielhaft: Benfuracarb, Carbosulfan, Fenamiphos, Oxamyl, Thionazin; für RO beispielhaft: Papain, Bromethalin, Calciferol, Coumafuryl, Fluoroacetamid; für SA beispielhaft: Benoxacor safener, Colquintocet-mexyl Safener, Fenchlorim Safener, Mefenpyrdiethyl Safener; für ST beispielhaft: Dazomet, 1,2 Dichloropropan; für SY beispielhaft: Piperonylbutoxid, Sulfaquinoxalin; für PG beispielhaft: Seealgenextrakt, Gibberilinsäure, Indolylbutylsäure und Cyanamid.

Als biozide Wirkstoffe kommen gemäß einer weiteren Ausführungsform biologische Pflanzenschutz- und Schädlingsbekämpfungsmittel in Betracht. Hierunter fallen vorzugsweise Bakterien, Schleimpilze, Pilze, Nematoden, Viren oder Substanzen oder andere Bestandteile daraus. In Frage kommen vorzugsweise Bacillus spp. (z.B. B. sphaericus IN, B. subtilis FU, B. thuringiensis IN mit B. thuringiensis aizawai, B. thuringiensis israelensis, B. thuringiensis kurstaki, B. thuringiensis tenebrionis), Pseudomonas spp., Streptomyces griseoviridis FU, Ampelomyces quisqualis FU, Granuloseviren IN oder beispielsweise Nuclear Polyhedrose Viren IN.

Vorzugsweise ist der biozide Wirkstoff (A) in der erfindungsgemäßen Zusammensetzung in einer Menge in einem Bereich von 0,0005 bis 80 Gew.-%, insbesondere in einer Menge von 0,05 bis 50 Gew.-%, jeweils bezogen auf das Gesamtgewicht der Zusammensetzung, enthalten.

Diese werden für das Ausbringen auf die Zielorganismen oder Zielorte oder Zielpflanzen mit Wasser verdünnt, aber auch mit wässrigen Lösungen, die andere Wirkstoffe enthalten können oder Nährstofflösungen, oder sie werden mit organischen Lösungsmitteln, wie Ölen, vor dem Ausbringen verdünnt. Die Einarbeitung von Wirkstoffen zusammen mit den erfindungsgemäßen Bioaktivatoren und anderen Bestandteilen in feste Zubereitungen oder Formulierungen, wie Pulver, Staub, Granulate, Tabletten sind ebenfalls möglich. Die Art der Herstellung von konzentrierten Zubereitungen, wie EC (Emulsionskonzentrate US-B-6 566 308 oder US-A-2003-0083201), SC (Suspensionskonzentrate WO-A-01/30156), WG (wasserdispergierbare Granulate EP-B-0 252 897 oder EP-B-0 224 845), WP (benetzbare Pulver WO-A-03/055306) und dergleichen sind dem Fachmann bekannt. Die Offenbarungen werden hiermit als Referenz eingeführt.

In einer anderen Ausführungsform können die Wirkstoffe in Form von Wirkstoffzusammensetzungen beinhaltend den Wirkstoff sowie Formulierungsmittel, wie beispielsweise organische Lösungsmittel, Entschäumer, anorganische Salze, Verdickungsmittel, Chelatbildner, pH-Regulatoren, Farbstoffe, mit dem Wasser und dem Additiv vermischt werden.

Bei Entschäumern kommen solche auf Basis von Silicon-, Mineraloder pflanzlichen Ölen in Frage, die als Emulsionen oder selbst-emulgierbare Konzentrate vorliegen können. Diese können Kieselsäure oder andere hydrophobe Teilchen enthalten. Zur Wirkungsverstärkung können organo-modifizierte Siloxane zugesetzt werden.

Als anorganisches Salz wird in einer bevorzugten Form der vorliegenden Erfindung Ammoniumsulfat zugesetzt. Dies geschieht einmal, um als Düngemittel zu wirken. Bei phosphorhaltigen organischen Säuren und deren Derivaten hat es sich als vorteilhaft für die biozide Wirkung herausgestellt, Ammoniumsulfat zuzusetzen. Andere Sulfate können ebenfalls zugesetzt werden.

Mitverwendbare Chelatbildner sind die auf diesem Gebiet bekannten Verbindungen wie beispielsweise Chelatbildner vom Aminopolycarbonsäuretyp, vom Typ aromatischer oder aliphatischer Carbonsäuren, vom Aminosäuretyp, Chelatbildner vom Etherpolycarbonsäuretyp, Iminodimethylphosphonsäure (IDP), Dimethylglyoxim (DG) und Alkyldiphosphonsäuren (ADPA). Diese Chelatbildner werden in reiner Form oder in Form ihrer Natrium-, Kalium- oder Ammoniumsalze verwendet.
Als pH-Regulatoren kommen insbesondere organische und anorganische Säuren wie Zitronensäure, Gluconsäure, Essigsäure, Salzsäure, Phosphorsäuren sowie deren Salze, des Weiteren organische und anorganische Basen wie Isopropylamin, Talgfettamine, Ammoniak sowie deren Salze zur Anwendung.

Die mitverwendbaren Verdickungsmittel sind die bekannten natürlichen und synthetischen wasserlöslichen Produkte wie beispielsweise Guargum, Xanthangum, Zanflow, Pectin, Gummi arabicum, methylierte, carboxyalkylierte und hydroxyalkylierte Celluloseprodukte, wie z.B. Methylcellulose, Carboxymethylcellulose und Hydroxymethylcellulose, methylierte, carboxyalkylierte und hydroxyalkylierte Stärkederivatprodukte, Sorbitol, Polyacrylate, Polymaleate, Polyvinylpyrrolidon und Pentaerythritol/Ethylenoxid-Addukte.

Die Erfindung betrifft weiterhin die Verwendung des Aktivators (B) vorzugsweise in Form einer konzentrierten wässrigen Formulierung zur Erhöhung der Wirksamkeit des Wirkstoffes im Vergleich zur gleichen Wirkstoffgabe ohne den Aktivator (B) unter ansonsten gleichen Bedingungen bei der Bekämpfung eines Organismus. Eine Erhöhung der Wirksamkeit bei der Bekämpfung eines Organismus liegt vor, wenn die Wirksamkeit bei der Bekämpfung eines Organismus in Gegenwart des Bioaktivators größer ist als bei der Bekämpfung eines Organismus in Abwesenheit des Bioaktivators.

Die Erfindung betrifft weiterhin die Verwendung des erfindungsgemäßen Bioaktivators in einer Zusammensetzung beinhaltend eine Wirkstoffkombination aus mindestens einem Wirkstoff (A) und zur Erhöhung von dessen Wirksamkeit mindestens eines Aktivators (B) im Sinne der allgemeinen Formel (I), worin die Kombination von landwirtschaftlich annehmbaren Wirkstoff oder Wirkstoffen mit Aktivator synergistisch wirken. Synergismus liegt vor, wenn die gefundene Wirksamkeit der Kombination größer ist als die erwartete Wirksamkeit der Kombination. Die Bestimmung von synergistischen Wirkungen ist beschrieben in: Colby, S.R. (1967): "Calculating Syngergistic and Antagonistic Responses of Herbicide Combinations", Weeds, 15: S. 20-22. Überraschenderweise wurde gefunden, dass die Additive im Sinne von Formel (I) bioaktivierend wirken, wobei Bioaktivierung angenommen werden muss, wenn der Aktivator als Soloprodukt ohne den Wirkstoff keinerlei Wirksamkeit hat, jedoch zusammen mit dem Wirkstoff dieser eine erhöhte Wirksamkeit zeigt.

Als Wirkstoffe für die Verwendungen bzw. als Wirkstoffe in der Wirkstoffkombination zur Bekämpfung eines Organismus sind diejenigen, im Zusammenhang mit der erfindungsgemäßen Zusammensetzung genannten Wirkstoffe bevorzugt, die in der Lage sind, Organismen zu bekämpfen.

Organismen sind vorzugsweise Schadpflanzen, insbesondere Schadkräuter und Ungräser, Schadpilze, Schadtiere wie beispielsweise Schadinsekten, Schadbakterien, Schadnematoden und schädliche Viren.

Organismen, die mit der erfindungsgemäßen Zusammensetzung bekämpft werden, befinden sich auf oder in einem Substrat. Als Substrate bevorzugt sind ganze Pflanzen oder Pflanzenteile wie Stängel, Äste, Blüten, Blätter, ganze oder geteilte Wurzeln oder Knollen, Saatgutkörner, Samen, Früchte oder Obst.

Die Erfindung betrifft weiterhin die Verwendung des Aktivators (B) vorzugsweise in Form einer wässrigen Lösung zur Erhöhung der Wirksamkeit des Wirkstoffes (A) im Vergleich zur gleichen Wirkstoffgabe ohne den Aktivator (B) unter ansonsten gleichen Bedingungen bei der Regulierung des Wachstums einer Pflanze.

Als Wirkstoffe für die Verwendungen bzw. die Verwendung in einer Wirkstoffkombination zur Unkrautbekämpfung und/oder zur Regulierung des Wachstums einer Pflanze sind diejenigen, im Zusammenhang mit der erfindungsgemäßen Zusammensetzung genannten Wirkstoffe bevorzugt, die in der Lage sind, das Wachstum von Pflanzen zu regulieren und/oder zu bekämpfen, wie beispielsweise und erfindungsgemäß bevorzugt Organophosphorverbindungen, vorzugsweise organische Säuren wie insbesondere Glyphosat und Glufosinat sowie deren Derivate, besonders bevorzugt mit Ammonium, Isopropylammonium, Natrium, Kalium und Trimesium als Kationen.

Die Erfindung betrifft weiterhin ein Verfahren zur Regulierung des Wachstums einer Pflanze, wobei die Pflanze mit den erfindungsgemäßen Zusammensetzungen in Kontakt gebracht wird.

Das in Kontakt bringen mit den erfindungsgemäßen Zusammensetzungen erfolgt vorzugsweise durch Aufstreichen, Tauchen oder Aufsprühen, wobei das Aufsprühen besonders bevorzugt ist.

Vorzugsweise werden die erfindungsgemäßen Zusammensetzungen aus einem Spritzbrühtank über bekannte Vorrichtungen, wie beispielsweise Spritzdüsen, aufgesprüht.

Die Erfindung betrifft weiterhin die Verwendung der erfindungsgemäßen Zusammensetzungen in der Landwirtschaft, in der Forstwirtschaft, beim Gartenanbau, beim Obstbau, bei der Vektorenkontrolle, bei der Pflanzenanzucht, bei der Pflanzenzucht, bei Saatgut, bei Pflanzengut, bei nicht-landwirtschaftlichen Anwendungen, zur Kontrolle oder Bekämpfung von Organismen, bei der Lagerung oder Verarbeitung von Früchten und Feldfrüchten oder pflanzlichen Materialien.

Bevorzugt ist die Verwendung der erfindungsgemäßen Zusammensetzungen als Sprühmittel auf pflanzliche Materialien, vorzugsweise Blätter und Stängel als Fungizid, als Insektizid und insbesondere als Herbizid bzw. als Pflanzenwachstumsregulierungsmittel.

Die Erfindung wird nachfolgend anhand von Testmethoden und nicht einschränkenden Beispielen näher erläutert.

Herstellbeispiele für Formulierungen, die erfindungsgemäße Stoffe der allgemeinen Formel I enthalten:

Betaine mit verschiedenen Alkyl-Kettenlängen des Restes R wurden hergestellt (Tabelle 1), bevor sie mit Glyphosat in eine Zusammensetzung überführt wurden.

**Tabelle 1:**

| Hergestellte Betaine mit unterschiedlichen Alkyl-Kettenlängen: | | | |
|---|---|---|---|
| Beispiel Nr. | Kettenlänge des Betains | Feststoff (%) | Wasser (%) |
| A 1 | C₆ | 60 | 40 |
| B 1 | C₈ | 45 | 55 |
| C 1 | C₁₀ | 40 | 60 |
| D 1 | C₁₂ | 35 | 65 |
| E 1 | C₁₄ | 29,9 | 70,1 |
| F 1 | C₈~C₁₈ (Kokosfettsäure) | > 98 | < 2 |
| G 1 | C₈~C₁₈ (Kokosfettsäure) | - 47 | - 53 |
| H 1 | C₈~C₁₀ | - 43 | - 57 |

Unter Feststoff ist der Gehalt zu verstehen, der beim Verdampfen von Wasser übrig bleibt. Bei den Beispielen der Tabelle 1 handelt es sich um die technischen Gemische der Betaine, hergestellt gemäß EP-B-0 560 114. F 1 ist ein sprühgetrocknetes Betain. H 1 basiert auf relativ kurzen Alkylketten und ist somit schaumarm eingestellt. Die Substanzen A 1 bis H 1 wurden dann in einer Formulierung mit Glyphosat verwendet (Tabelle 2). Dabei wurde der Gehalt des Isopropylaminsalzes (IPA) von Glyphosat auf einen bestimmten Gehalt an Säureäquivalenten (a.e.) eingestellt.

**Tabelle 2:**

| Hergestellte Glyphosat-Formulierungen (Rest mit Wasser auf 1 Liter aufgefüllt): | | | |
|---|---|---|---|
| Beispiel Nr. | Verwendetes Betain | Glyphosatgehalt (g a.e./l) | Betainfeststoffgehalt (g/l) |
| A 2 | A 1 | 288 | 60 |
| B 2 | B 1 | 288 | 60 |
| C 2 | C 1 | 288 | 60 |
| D 2 | D 1 | 288 | 60 |
| E 2 | E 1 | 288 | 54 |
| F 2 | F 1 | 288 | 60 |
| G 2 | G 1 | 288 | 60 |
| H 2 | H 1 | 288 | 60 |

In den folgenden Beispielen sind Zusammensetzungen aufgeführt, die entweder einen Wirkstoff (I bis M und S bis W) oder keinen Wirkstoff enthalten (N bis R). Die Zusammensetzungen können auch Zusatzstoffe wie Ammoniumsulfat und oder Mittel zur Verminderung der Schaumbildung enthalten. Bei den Entschäumern BREAK-THRU® AF 9903 und TEGO® Antifoam MR 2222 handelt es sich um kommerzielle Mittel der Firma Goldschmidt AG.

**Tabelle 3:**

| Formulierungsbeispiele für Glyphosat-IPA mit Betainen und Entschäumern (Rest mit Wasser auf 1 Liter aufgefüllt): | | | | | | |
|---|---|---|---|---|---|---|
| Beispiel Nr. | Glyphosatgehalt (g a.e./l) | G 1 (ml) | H 1 (ml) | (NH₄)₂SO₄ (g) | AF 9903 (ml) | MR 2222 (ml) |
| I | 480 | 130 | | | | |
| J | 480 | 130 | | | 1 | |
| K | 480 | 130 | | | 2,5 | |
| L | 480 | 130 | | | 5 | |
| M | 480 | 130 | | | | 2,5 |
| N | | 652 | | 190 | 5 | |
| O | | | 714 | 280 | | |
| P | | 652 | | | | |
| Q | | 652 | | | 3 | |
| R | | 652 | | 190 | 3 | |
| S | 360 | 130 | | 90 | 1 | |
| T | 288 | 130 | | 160 | | |
| U | 480 | | | | | |
| V | 360 | | | | | |
| W | 360 | 130 | | | | |

Die Tabelle 4 gibt die Messungen der Schaummenge einer 2 %igen Lösung oberhalb der Grenzfläche zwischen Wasser und Luft von Formulierungen wieder. Dieses entspricht der Konzentration der auf die Pflanzen aufgebrachten Spritzbrühe. Die Schaumbildung wurde dabei in einem 100 ml Volumen fassenden Messzylinder mit 30 mm Innendurchmesser nach Zugabe von 50 ml der wässrigen Lösung und manuellem Schütteln (30 Hübe) nach 10 Sekunden bestimmt.

**Tabelle 4:**

| Schaumbildung und Aussehen von Formulierungen nach Zugabe zu Wasser (2 % wässrige Lösung) | | |
|---|---|---|
| Formulierung Nr. | Aussehen der unverdünnten Formulierung (Tab. 3) | Schaummenge in 2 % aq. Lösung [ml] |
| I | Transparent | 70 |
| J | Transparent | 30 |
| K | Transparent | 15 |
| L | Trüb | 10 |
| M | Sehr trüb | 30 |
| O | Transparent | - |
| P | Transparent | 80 |
| Q | Trüb | 30 |
| S | Trüb | - |
| T | Transparent | - |

Die Ergebnisse zeigen, dass BREAK-THRU® AF 9903 einen hochwirksamen Entschäumer darstellt (Beispiele J bis L), der allerdings bei höheren Mengen (Beispiel L) zu einer Eintrübung der Formulierung führt. Selbst in geringen Mengen ist der alternative Entschäumer MR 2222 in der Formulierung M zwar wirksam, jedoch nicht verträglich. Das Beispiel O zeigt, dass ein Beispiel aus den erfindungsgemäßen Bioaktivatoren mit Ammoniumsulfat versetzt werden kann und eine transparente Zusammensetzung ergibt, was sie für den Einsatz als separaten Zusatz zur Spritzbrühe geeignet macht.
Ammoniumsulfat kann Bestandteil einer wirkstoffhaltigen transparenten Formulierung mit Betain sein (Beispiel T), allerdings führt der weitere Zusatz von Entschäumer AF 9903 zu einer Unverträglichkeit, selbst wenn die Menge Ammoniumsulfat gegenüber Beispiel T halbiert wird (Beispiel S).
Beim Vergleich der Beispiele K und Q fällt auf, dass die Anwesenheit von Wirkstoff in Beispiel K im Gegensatz zu Beispiel Q eine transparente Zusammensetzung ergibt. Offenbar wirkt Glyphosat als Lösungsvermittler für den Entschäumer AF 9903.

### Prüfung der Viskositätserhöhung der Formulierung:

Die Formulierungsbeispiele I und U unterscheiden sich nur dadurch, dass U keinen Bioaktivator enthält. Die Viskositäten der Formulierungen wurden nach der dem Fachmann bekannten Methode mit dem Brookfield Viscosimeter, Model LV, Spindel Nr. 2 bei 30 Umdrehungen pro Minute bestimmt bei 20 °C im Labor. Als Ergebnis zeigte sich, dass die Formulierung I eine Viskosität von 74 mPas aufwies und Formulierung U von 120 mPas. Die Formulierungsbeispiele V und W unterscheiden sich ebenfalls nur dadurch, dass V keinen Bioaktivator enthält. Für Formulierung V wurde eine Viskosität von 15 mPas und für W eine Viskosität von 25 mPas bestimmt. Durch den Bioaktivator wurde also überraschenderweise eine technisch besser handhabbare Formulierung erzeugt, die ihre Einbringung in den Spritzmitteltank sicherer macht, da durch die erhöhte Viskosität der Formulierung nicht die Gießfähigkeit verringert wird, wohl aber das Verdriftungsrisiko durch starken Wind beim Eingießen in den Spritzmitteltank. Die Viskositätserhöhung führt somit zu geringerem Risiko der Kontamination des Anwenders der Formulierung mit der Wirkstofflösung und somit zu einem verringerten Risiko einer irritierenden Wirkung einer Zusammensetzung im Sinne des Patentes auf den menschlichen Körper.

Prüfung der biologischen Wirkungsverstärkung durch Bioaktivatoren im Sinne des Patentes:

### Beispiel 1:

Auf einem Feld wurden für Versuche zur Bekämpfung von Pflanzen, die auch als Unkräuter oder Ungräser bezeichnet werden, die folgenden Pflanzenarten ausgesät:

Drei breitblättrige Unkräuter: Ipomea grandifolia (IAQGR), Euphorbia heterophylla (EUPHL), Senna tora (synonym mit Cassia obtusifolia (CASOB), und drei Ungräser: Brachiaria plantaginea (BRAPL), Echinocloa colonum (ECHCO) und Eleusine indica (ELEIN) .

Die Pflanzen wurden mit den Formulierungen A 2 bis E 2 (Tabelle 2) im Vergleich zu Roundup® besprüht, einer kommerziellen Glyphosat-Formulierung der Firma Monsanto, die 360 g a.e./l enthält und als hochwirksame Formulierung in der landwirtschaftlichen Praxis bekannt ist. Von der kommerziellen Formulierung und von den Formulierungen A 2 - E 2 wurden 1 l/ha, 1,5 l/ha und 2 l/ha nach Verdünnung in 100 1 Wasser über Düsen auf die Pflanzen gesprüht, als diese blühten oder sich im aktiven Wachstumsstadium befanden, also eine Höhe von ca. 30 bis 50 cm hatten. Jede Behandlung wurde auf 4 Kleinparzellen wiederholt.

21 Tage nach der Behandlung der Pflanzen wurde die verbräunte und nekrotisierte Fläche der Pflanzen in Prozent im Vergleich zu unbehandelten Pflanzen abgeschätzt, ein dem Fachmann bekanntes Verfahren der Bonitur der Wirksamkeit Herbiziden. Die Resultate der Wirksamkeit (% Kontrolle) sind in Tabelle 5 beispielhaft an dem breitblättrigen Unkraut CASOB und dem Ungras ECHCO dargestellt:

**Tabelle 5:**

| Wirkung (% Kontrolle) | | | | |
|---|---|---|---|---|
| Pflanze | Behandlung | Kontrolle (%) | | |
| | | 1 l/ha | 1,5 l/ha | 2 l/ha |
| | | | | |
| CASOB | Roundup | 76,7 | 86,7 | 96,0 |
| | A 2 | 48,3 | 76,7 | 83,3 |
| | B 2 | 56,7 | 86,7 | 93,3 |
| | C 2 | 89,0 | 88,3 | 96,0 |
| | D 2 | 78,3 | 85,0 | 96,0 |
| | E 2 | 71,7 | 88,3 | 100 |
| | | | | |
| ECHCO | Roundup | 61,7 | 83,3 | 93,3 |
| | A 2 | 66,7 | 83,3 | 93,3 |
| | B 2 | 63,3 | 88,3 | 93,3 |
| | C 2 | 63,3 | 96,7 | 95,0 |
| | D 2 | 61,7 | 85,0 | 95,0 |
| | E 2 | 63,3 | 86,7 | 93,3 |

Aus der Tabelle geht hervor, dass die Betaine C 1 bis E 1, die mit Glyphosat zusammengebracht wurden, die Wirksamkeit von Glyphosat so gut verstärkten, dass die Formulierungen C 2 bis E 2 im Ergebnis dem kommerziellen Standard Roundup ähnlich waren, oder ihr bei einigen Dosierungen überlegen waren, obwohl 20 % weniger herbizider Wirkstoff ausgebracht wurde! Überraschenderweise hat die Formulierung C 2, die das Betain C 1 enthielt, besonders bei niedrigen Aufwandmengen von 1 l/ha und 1,5 l/ha die Wirksamkeit über die des kommerziellen Standards hinaus stark verbessert, obwohl auch hier 20 % weniger Herbizid eingesetzt wurde.

### Beispiel 2:

Ein Feldversuch wurde angelegt, in dem die herbizide Wirkung der Beispiel-Formulierungen F 2 und G 2 mit den kommerziellen Glyphosat-Formulierungen Roundup® Ultra (RUU) von Monsanto und Glyfos® von Cheminova (GLY) mit jeweils 360 g a.e/l Glyphosat verglichen wurden. Dafür wurden Parzellen von 18 m² Fläche mit den entsprechenden Mengen von 2 l/ha und 4 l/ha der Formulierungen, gelöst in 200 l/ha Wasser, mit Flachstrahldüsen ausgebracht. Jede Behandlungsparzelle wurde vierfach wiederholt. Das gesamte Feld hatte einen gleichmäßig verteilten Pflanzenbestand von Mais (Zea mays, mit 14 % Bodendeckung), Echinochloa crus-galli (ECHCG) mit 17 % Bodendeckung, Chenopodium album (CHEAL) mit 24 % Bodendeckung, Chenopodium polyspermum (CHEPO) mit 6 % Bodendeckung, Amaranthus retroflexus (AMARE) mit 29 % Bodendeckung und Solanum nigrum (SOLNI) mit 6 % Bodendeckung beim Ausbringen der Mittel. Die Pflanzen waren beim Besprühen etwa 30 bis 45 cm hoch.

Die Wirksamkeit der Behandlung (% Kontrolle) wurde anhand der verbräunten und nekrotisierten Fläche der individuellen Pflanzenarten im Vergleich zu unbehandelten Pflanzen bei 11, 22 und 33 Tagen nach der Behandlung abgeschätzt. Dieses Verfahren der Bonitur von Herbiziden ist dem Fachmann geläufig. Beispielhaft wird die Wirksamkeit der patentmäßig hergestellten Formulierungen für die Wachstumsregulierung von Mais und für die Bekämpfung von ECHCG, sowie AMARE und SOLNI bei 33 Tagen nach der Behandlung (DAT) gezeigt.

**Tabelle 6:**

| Wirkung (% Kontrolle) 33 Tage nach der Behandlung (DAT): | | | |
|---|---|---|---|
| Behandlung Formulierung | Dosierung l/ha | Mais 33 DAT | ECHCG 33 DAT |
| | | | |
| RUU | 2 | 34 | 48 |
| | 4 | 89 | 87 |
| | | | |
| GLY | 2 | 15 | 10 |
| | 4 | 89 | 89 |
| | | | |
| F 2 | 2 | 30 | 45 |
| | 4 | 91 | 93 |
| | | | |
| G 2 | 2 | 68 | 35 |
| | 4 | 96 | 93 |

Die Formulierungen F 2 und G 2 waren der GLY-Formulierung überlegen, und die Formulierung G 2 war im Mais beiden kommerziellen Glyphosat-Formulierungen auch bei niedriger Aufwandmenge überlegen; F 2 und G 2 hatten gegen ECHCG besonders bei der höheren Aufwandmenge von 4 l/ha eine bessere Wirksamkeit (Tabelle 6). Die überlegene Wirkung von F 2 und G 2 wird auch dadurch deutlich, dass die Konzentration von Glyphosat in den Formulierungen F 2 und G 2 um 20 % niedriger als in RUU und GLY war. Eine Wirkstoff-Reduktion pro Hektar im Vergleich zu den kommerziellen Mitteln, unter Beibehaltung einer sehr guten Wirksamkeit gegen Ungräser, ist also durch den Zusatz der Betaine F 1 und G 1 zu dem Wirkstoff möglich.

**Tabelle 7:**

| Wirkung (% Kontrolle) 33 Tage nach der Behandlung (DAT): | | | |
|---|---|---|---|
| Behandlung Formulierung | Dosierung l/ha | AMARE 33 DAT | SOLNI 33 DAT |
| RUU | 2 | 48 | 28 |
| | 4 | 89 | 46 |
| | | | |
| GLY | 2 | 3 | 0 |
| | 4 | 73 | 83 |
| | | | |
| F 2 | 2 | 24 | 41 |
| | 4 | 88 | 93 |
| | | | |
| G 2 | 2 | 86 | 33 |
| | 4 | 97 | 95 |

Die Resultate in Tabelle 7 zeigen, dass die Formulierungen F 2 und G 2 eine bessere Wirkung als GLY hatten, und dass beide Formulierungen eine bessere Wirkung als RUU bei dem schwer zu bekämpfenden, breitblättrigen Unkraut SOLNI hatten. Die Formulierung G 2 wirkte auch bei niedriger Dosierung ausgezeichnet gegen AMARE. Die überlegene Wirkung von F 2 und G 2 wird noch dadurch unterstrichen, dass die Konzentration von Glyphosat in den Formulierungen F 2 und G 2 um 20 % geringer als in RUU und GLY war. Eine Wirkstoff-Reduktion pro Hektar im Vergleich zu kommerziellen Mitteln ist unter Beibehaltung einer sehr guten Wirksamkeit gegen breitblättrige Unkräuter also durch den Zusatz der Betaine F 1 und G 1 zu dem Wirkstoff möglich.

Die Ergebnisse des Beispiels 2 zeigen, dass auch kommerziell verfügbare Betaine, die besonders kostengünstig in fester oder flüssiger Form im Markt erhältlich sind, eine bioaktivierende Wirkung haben, die der von C-kettenreinen Betainen, die also auf bestimmten Fettsäuren basieren, entspricht oder darüber hinausgeht. Der Fettsäureschnitt in Kokosfett, auf welchem F 1 und G 1 beruhen, hat einen besonderen Einfluss auf die bioaktivierende Wirkung. Daher wird in einer bevorzugten Ausführung eine Abmischung von Fettsäuren mit 10, 12 und 14 C-Atomen verwendet. Solch eine Abmischung kann natürlicher Art wie in Kokosfett oder Palmkernöl sein oder durch gezielte Abmischung der reinen Fettsäuren erzeugt werden.

**Tabelle 8:**

| Zusammensetzung der Fettsäuren in Kokosfett (gesättigte Fettsäuren/100 g Fettsäure) nach Ullmanns Encyclopedia of Industrial Chemistry, VCH Verlag, 5. Auflage 1987: | | | | | |
|---|---|---|---|---|---|
| C₁₀ | C₁₂ | C₁₄ | C₁₆ | C₁₈ | C₂₀ |
| ∼ 13 | 41-46 | 18-21 | 9-12 | 2-4 | Spuren |

Diese Betaine sind, bezogen auf einer Feststoff-Konzentration von 6 %, in der Glyphosat-Formulierung, kostengünstiger als gegenwärtig genutzte Formulierungshilfsstoffe und Wirkungsverbesserer in den geläufigen kommerziellen Glyphosat-Formulierungen. Derzeit werden hauptsächlich Talgfettamine und deren Derivate für die Wirkstoffverstärkung von Glyphosat eingesetzt. Die Ergebnisse der Versuche zeigen, dass die neuen Formulierungen F 2 und G 2, die Betaine enthalten, dem Glyfos® welches ein ethoxyliertes Talgfettamin zur Wirkungsverstärkung enthält, weit in der Wirksamkeit überlegen sind, insbesondere bei niedrigen Dosierungen. Es hat also eine überlegene bioaktivierende Wirkung durch die im Patent beschriebenen Betaine im Sinne des Patentes stattgefunden.

### Beispiel 3:

In einem weiteren Feldversuch wurde die Bioaktivierung der kommerziellen Glyphosat-Formulierung Glyfos® von Cheminova (mit 360 g a.e./l Glyphosat) durch Bioaktivator Q untersucht. Dafür wurden 1,5 l/ha beziehungsweise 3 l/ha Glyfos® in 200 l/ha Wasser gelöst und diesem Wasser entweder separat kein oder 0,5 l/ha Bioaktivator Q zugegeben. Die Mischung wurde umgerührt und äquivalente Mengen wurden auf Parzellen von 18 m² Fläche mit Flachstrahldüsen ausgebracht. Ebenso wurden 0,5 l/ha Bioaktivator Q allein, ohne Glyfos® , ausgebracht. Jede Behandlungsparzelle wurde vierfach wiederholt. Das gesamte Feld hatte einen gleichmäßig verteilten Pflanzenbestand von Weizen und 7 breitblättrigen Unkräutern, wobei Galinsoga parviflora (GASPA) mit 24 % Bodendeckung und Chenopodium album (CHEAL) mit 26 % Bodendeckung die Hauptunkräuter waren. Weizen (TRZAW) hatte beim Ausbringen der Mittel eine Bodendeckung von 5 %. Die Pflanzen waren beim Besprühen etwa 15 bis 30 cm hoch.

Die Wirksamkeit der Behandlung (% Kontrolle) wurde anhand der verbräunten und nekrotisierten Fläche des gesamten Pflanzenbestandes und der individuellen Pflanzenarten im Vergleich zu unbehandelten Planzen bei 5, 10 und 20 Tagen nach der Behandlung abgeschätzt. Dieses Verfahren der Bonitur der Wirksamkeit von Herbiziden ist dem Fachmann geläufig. Beispielhaft wird die Wirksamkeit der Behandlungen am Gesamtbestand in Tabelle 9 dargestellt.

**Tabelle 9:**

| Wirksamkeit von Mischungen bei 20 Tagen nach der Behandlung: | | | | | |
|---|---|---|---|---|---|
| Behandlung Glyfos | Dosierung l/ha Glyfos | Bioaktivatorformulierung | Dosierung l/ha Bioaktivator | Gesamtbestand % Kontrolle gefunden | Gesamtbestand % Kontrolle erwartet |
| | | | | | |
| Glyfos | 1,5 | ohne | | 73 | |
| Glyfos | 3,0 | ohne | | 83 | |
| | | | | | |
| Glyfos | 1,5 | Q | 0,5 | 88 | 73 |
| Glyfos | 3,0 | Q | 0,5 | 92 | 83 |
| | | | | | |
| | | | | | |
| Ohne | | Q | 0,5 | 0 | |

Die Ergebnisse in Tabelle 9 zeigen, dass der Zusatz Q zur Tankmischung die Wirksamkeit von Glyfos bedeutend erhöht hat, obwohl der Zusatz Q selbst keinerlei Wirksamkeit hatte. Die tatsächlich gefundene Wirksamkeit der Kombination von Wirkstoff in Glyfos mit Bioaktivator Q war bei beiden Wirkstoffdosierungen bedeutend höher als die erwartete Wirkung, die sich aus der Summe der Wirksamkeiten der Wirkstoff- mit Bioaktivatorformulierung hätte ergeben müssen. Überraschenderweise kommt es bei der Kombination zu synergistischen Wirkungen (nach Colby, S.R., 1967: "Calculating Syngergistic and Antagonistic Responses of Herbicide Combinations", Weeds, 15: S. 20-22).

### Beispiel 4:

In einem Feldversuch in Winterweizen, Sorte "Hattrick", wurde die Bioaktivierung der kommerziellen Fungizidformulierung Opus-Top® von BASF (mit 84 g a.i/l Epoxiconazol + 250 g a.i./l Fenpropimorph) durch Bioaktivator Formulierung Q gegen Pflanzenkrankheiten untersucht. Dafür wurden 0,75 l/ha Opus Top in 300 l/ha Wasser gelöst und diesem Wasser entweder separat kein oder 0,5 l/ha Bioaktivator Q zugegeben. Die Mischung wurde umgerührt und äquivalente Mengen wurden auf Parzellen von 25 m² Fläche mit Flachstrahldüsen ausgebracht. Jede Behandlungsparzelle wurde vierfach wiederholt. Unbehandelte Parzellen wurden ebenfalls angelegt. Die Behandlungen durch Besprühung der oberirdischen Pflanzenmasse erfolgten im Wachstumsstadium BBCH 32-33 (ca. 42-45 cm Wuchshöhe) und BBCH 51-55 (ca. 75-85 cm Wuchshöhe). Auf der Weizenkultur ergaben sich auf natürlicher Weise Krankheitsbefall der Blätter mit Septoria tritici und Weizenrost, zwei gefürchtete und stark schädigende Krankheiten des Weizens. Das Auftreten der Krankheiten auf den Blättern wurde zu verschiedenen Zeitpunkten bonitiert (auf % befallene Blattfläche), wie es dem Fachmann geläufig ist. Je geringer der Krankheitsbefall, um so wirksamer ist die Behandlung. Beispielhaft wird die Wirksamkeit der Behandlung mit dem Fungizid und dem Bioaktivator durch die Boniturergebnisse auf dem Fahnenblatt des Weizens wiedergegeben. Das Fahnenblatt ist das oberste und wichtigste Blatt der Pflanze. Assimilate des Fahnenblattes werden direkt zur Einlagerung in das Getreidekorn genutzt und je gesünder das Fahnenblatt, umso höher ist der Ertrag. Die Bonitur auf Septoria tritici (Blattdürre) erfolgte bei 24 Tagen nach der zweiten Behandlung, die Bonitur auf Weizenrost erfolgte bei 45 Tagen nach der zweiten Applikation. Die Ergebnisse sind in Tabelle 10 dargestellt. Es war zu keinem Zeitpunkt während der Kultur eine Schädigung durch die Behandlungen feststellbar. Das heißt, dass der Bioaktivator keine Phytotoxizität verursacht.

**Tabelle 10:**

| Wirksamkeit gegen Pflanzenkrankheiten: | | |
|---|---|---|
| Behandlung | Septoria tritici Krankheit % befallene Blattfläche)¹ | Weizenrost % befallene Blattfläche)¹ |
| Unbehandelt | 6.5 a | 17.4 a |
| Opus Top | 5.3 a | 20.3 a |
| Opus Top + Bioaktivator Q | 0.0 b | 8.9 b |

| | | |
|---|---|---|
| ¹Zahlen in derselben Spalte mit demselben Buchstaben sind statistich nicht signifikant verschieden (P = 0.05) | | |

Die Ergebnisse in Beispiel 4 zeigen, dass der Bioaktivator im Sinne des Patentes keine Schädigung der Kulturpflanzen verursacht, wenn er mit Fungiziden kombiniert wird. Es ist aus den Ergebnissen in Tabelle 10 eindeutig, dass durch die Zugabe des Bioaktivators im Sinne des Patentes eine Bioaktivierung des kommerziellen Fungizids erfolgte, da dieses ohne Bioaktivator keinerlei Wirksamkeit hatte. Berücksichtigend, dass, wie auch in Beispiel 3 gezeigt, der Bioaktivator selbst keinerlei biologische Wirkung hat, ist auch hier mit Fungiziden eine synergistische Wirkung mit Bioaktivator vorzuzeigen.

Die hier gegebenen Beispiele beziehen sich auf Herbizide und Fungizide. Die Beispiele schließen jedoch eine bioaktivierende Wirksamkeit der Betaine im Sinne des Patentes und synergistische Wirkungen für andere Wirkstoffe nicht aus. Es ist zu erwarten, dass die bioaktivierende Wirkung der Betaine im Sinne der Erfindung auch für andere landwirtschaftlich annehmbare Wirkstoffe gilt. Die hier gezeigten Beispiele haben somit nur Beispiel-Charakter für alle Pestizide und Biozide im Sinne der Erfindung.

## Patentansprüche

1. Biologisch wirksame Kombination für landwirtschaftliche Anwendungen, bestehend aus
A) mindestens einem bioziden, landwirtschaftlich annehmbaren Wirkstoff und
B) einem Bioaktivator für die Wirksubstanz gemäß A) und
C) gegebenenfalls üblichen Hilfs- und Zusatzstoffen,
**dadurch gekennzeichnet, dass** als Bioaktivator B) mindestens eine Verbindung der allgemeinen Formel (I)
R-C(O)NH-(CH₂)ₐ-N⁺(R¹,R²) -(CH₂)_{b}-COO⁻ (I)
worin bedeuten
R ein gegebenenfalls verzweigter und/oder Mehrfachbindungen und/oder funktionelle Gruppen enthaltender Kohlenwasserstoffrest mit 6 bis 22 C-Atomen, vorzugsweise 8 bis 18 und insbesondere 10 bis 14 C-Atomen,
R¹, R² unabhängig voneinander C₁₋₄-Alkylreste, insbesondere -CH₃,
a 1 bis 5, vorzugsweise 2 oder 3,
b 1 oder 2
in wirksamer Konzentration mitverwendet wird.

2. Biologisch wirksame Kombination gemäß Anspruch 1, **dadurch gekennzeichnet, dass** als biozider, landwirtschaftlich annehmbarer Wirkstoff A) Akarizide (AC), Algizide (AL), Attractantien (AT), Reppelentien (RE) Bakterizide (BA), Fungizide (FU), Herbizide (HB), Insektizide (IN), Molluskizide (MO), Nematizide (NE), Rodentizide (RO), Safener (SA), Sterilantien (ST), Synergentien (SY), Virizide (VI) Wachstumsregulatoren (PG) allein oder in Kombination mitverwendet werden.

3. Biologisch wirksame Kombination gemäß den Ansprüchen 1 bis 2, **dadurch gekennzeichnet, dass** als biozider, landwirtschaftlich annehmbarer Wirkstoff A) mindestens eine Organophosphorverbindung oder deren Derivate mitverwendet werden.

4. Biologisch synergistisch wirksame Kombination gemäß den Ansprüchen 1 bis 3, **dadurch gekennzeichnet, dass** als biozider Wirkstoff A) Glyphosat oder dessen Derivate und oder Salze davon mitverwendet werden.

5. Biologisch synergistisch wirksame Kombination gemäß den Ansprüchen 1 bis 2, **dadurch gekennzeichnet, dass** als biozider Wirkstoff A) ein Fungizid allein oder in Kombination mitverwendet wird.

6. Verfahren zur Verstärkung der Aktivität von wässrigen biologisch aktiven Zusammensetzungen für landwirtschaftliche Anwendungen, enthaltend einen bioziden, landwirtschaftlich annehmbaren Wirkstoff, gegebenenfalls übliche Hilfs- und Zusatzstoffe und einen Bioaktivator, **dadurch gekennzeichnet, dass** als Bioaktivator eine wirksame Menge mindestens einer Verbindung der allgemeinen Formel (I)
R-C(O)NH-(CH₂)ₐ-N⁺(R¹, R²)-(CH₂)_{b}-COO⁻ (I)
worin bedeuten
R ein gegebenenfalls verzweigter und/oder Mehrfachbindungen und/oder funktionelle Gruppen enthaltender Kohlenwasserstoffrest mit 6 bis 22 C-Atomen, vorzugsweise 8 bis 18 und insbesondere 10 bis 14 C-Atomen,
R¹, R² unabhängig voneinander C₁₋₄-Alkylreste, insbesondere -CH₃,
a 1 bis 5, vorzugsweise 2 oder 3,
b 1 oder 2
in wirksamer Konzentration mitverwendet wird.

7. Verfahren nach Anspruch 6, worin der landwirtschaftlich annehmbare Wirkstoff ein Akarizid (AC), Algizid (AL), Attractant (AT), Reppelent (RE) Bakterizid (BA), Fungizid (FU), Herbizid (HB), Insektizid (IN), Molluskizid (MO), Nematizid (NE), Rodentizid (RO), Safener (SA), Sterilant (ST), Synergent (SY), Virizid (VI) Wachstumsregulator (PG) oder eine Kombination aus diesen ist.

8. Verfahren nach den Ansprüchen 6 oder 7, worin das Herbizid aus der Gruppe phosphorhaltiger organischer Säuren ausgewählt ist.

9. Verfahren nach einem der Ansprüche 6 bis 8, worin das Gewichtsverhältnis des Bioaktivators zum biozid-wirksamen, landwirtschaftlich annehmbaren Wirkstoff 0,001 bis 200, insbesondere 0,03 bis 50 ist.

10. Wässrige lagerstabile Biozidzusammensetzung mit verbesserter biozider Aktivität, enthaltend 0,05 bis 50 Gew.-% eines Biozids, ausgewählt aus der Gruppe der HB, FU, IN oder PG und 0,5 bis 50 Gew.-% eines Bioaktivators der allgemeinen Formel (I)
R-C(O)NH-(CH₂)ₐ-N⁺(R¹, R²)-(CH₂)_{b}-COO⁻ (I)
worin bedeuten
R ein gegebenenfalls verzweigter und/oder Mehrfachbindungen und/oder funktionelle Gruppen enthaltender Kohlenwasserstoffrest mit 6 bis 22 C-Atomen, vorzugsweise 8 bis 18 und insbesondere 10 bis 14 C-Atomen,
R¹, R² unabhängig voneinander C₁₋₄-Alkylreste, insbesondere -CH₃,
a 1 bis 5, vorzugsweise 2 oder 3,
b 1 oder 2.

11. Wässrige Biozidzusammensetzung gemäß Anspruch 10, enthaltend als übliche Hilfs- und Zusatzstoffe biozidverträgliche Salze, Verdickungsmittel, Entschäumer, Chelatisierungs-mittel, pH-Regulatoren.

12. Verfahren zur Behandlung von Pflanzen, welches das Aufbringen einer wässrigen Biozidzusammensetzung gemäß den Ansprüchen 1 bis 5 auf die Pflanzen umfasst.

13. Verfahren zur Regulierung des Wachstums einer Pflanze, wobei die Pflanze mit den erfindungsgemäßen Zusammensetzungen gemäß den Ansprüchen 1 bis 5 in Kontakt gebracht wird.

14. Verfahren gemäß den Ansprüchen 12 und 13, **dadurch gekennzeichnet, dass** die Menge an biozider Wirkkomponente und Bioaktivator 0,01 bis 10 kg/ha, insbesondere 0,5 bis 5 kg/ha beträgt.

## Claims

1. Biologically active combination for agricultural applications consisting of
A) at least one biocidal, agriculturally acceptable active compound and
B) a bioactivator for the active substance according to A) and
C) if appropriate, customary auxiliaries and additives,
**characterized in that** at least one compound of the formula (I)
R-C(O)NH-(CH₂)ₐ-N⁺(R¹,R²)-(CH₂)_{b}-COO⁻ (I)
in which
R is a hydrocarbon radical having 6 to 22 carbon atoms, preferably 8 to 18 and in particular 10 to 14 carbon atoms, which is optionally branched and/or contains multiple bonds and/or functional groups,
R¹, R² independently of one another are C₁₋₄-alkyl radicals, in particular -CH₃,
a is 1 to 5, preferably 2 or 3,
b is 1 or 2,
is used, as bioactivator B), in an effective concentration.

2. Biologically active combination according to Claim 1, **characterized in that** acaricides (AC), algicides (AL), attractants (AT), repellants (RE), bactericides (BA), fungicides (FU), herbicides (HB), insecticides (IN), molluscicides (MO), nematicides (NE), rodenticides (RO), safeners (SA), sterilants (ST), synergists (SY), viricides (VI), growth regulators (PG), are used as biocidal, agriculturally acceptable active compound A) alone or in combination.

3. Biologically active combination according to Claims 1 to 2, **characterized in that** at least one organophosphorus compound or derivatives thereof are used as biocidal, agriculturally acceptable active compound A).

4. Biological, synergistically active combination according to Claims 1 to 3, **characterized in that** glyphosate or derivatives thereof or salts thereof are used as biocidal active compound A).

5. Biological, synergistically active combination according to Claims 1 to 2, **characterized in that** a fungicide, alone or in combination, is used as biocidal active compound A).

6. Process for enhancing the activity of aqueous biologically active compositions for agricultural applications, containing a biocidal, agriculturally acceptable active compound, if appropriate customary auxiliaries and additives and a bioactivator, **characterized in that** an effective amount of at least one compound of the formula (I)
R-C(O)NH-(CH₂)ₐ-N⁺(R¹,R²)-(CH₂)_{b}-COO⁻ (I)
in which
R is a hydrocarbon radical having 6 to 22 carbon atoms, preferably 8 to 18 and in particular 10 to 14 carbon atoms, which is optionally branched and/or contains multiple bonds and/or functional groups,
R¹, R² independently of one another are C₁₋₄-alkyl radicals, in particular -CH₃,
a is 1 to 5, preferably 2 or 3,
b is 1 or 2,
is employed as bioactivator in an effective concentration.

7. Process according to Claim 6, wherein the agriculturally acceptable active compound is an acaricide (AC), algicide (AL), attractant (AT), repellant (RE), bactericide (BA), fungicide (FU), herbicide (HB), insecticide (IN), molluscicide (MO), nematicide (NE), rodenticide (RO), safener (SA), sterilant (ST), synergist (SY), viricide (VI), growth regulator (PG) or a combination of these.

8. Process according to Claim 6 or 7, wherein the herbicide is selected from the group of phosphorus-containing organic acids.

9. Process according to any of Claims 6 to 8, wherein the weight ratio of the bioactivator to the biocidally active, agriculturally acceptable active compound is from 0.001 to 200, in particular from 0.03 to 50.

10. Aqueous storage-stable biocide composition having improved biocidal activity, comprising from 0.05 to 50% by weight of a biocide selected from the group of the HB, FU, IN or PG and from 0.5 to 50% by weight of a bioactivator of the formula (I)
R-C(O)NH-(CH₂)ₐ-N⁺(R¹,R²)-(CH₂)_{b}-COO⁻ (I)
in which
R is a hydrocarbon radical having 6 to 22 carbon atoms, preferably 8 to 18 and in particular 10 to 14 carbon atoms, which is optionally branched and/or contains multiple bonds and/or functional groups,
R¹, R² independently of one another are C₁₋₄-alkyl radicals, in particular -CH₃,
a is 1 to 5, preferably 2 or 3,
b is 1 or 2.

11. Aqueous biocide composition according to Claim 10, comprising, as customary auxiliaries and additives, biocide-compatible salts, thickeners, antifoams, chelating agents, pH regulators.

12. Method for treating plants, which comprises applying an aqueous biocide composition according to Claims 1 to 5 to the plants.

13. Method for regulating the growth of a plant, which comprises bringing the plant into contact with the compositions according to the invention according to Claims 1 to 5.

14. Method according to Claim 12 or 13, **characterized in that** the amount of biocidal active component and bioactivator is from 0.01 to 10 kg/ha, in particular from 0.5 to 5 kg/ha.

## Revendications

1. Combinaison à activité biologique pour applications agricoles, constituée
A) d'au moins une matière active biocide, acceptable d'un point de vue agricole,
B) d'un bioactivateur pour la matière active selon A), et
C) éventuellement, d'additifs et d'adjuvants usuels,
**caractérisée en ce qu'**on utilise en tant que bioactivateur B), à une concentration efficace, au moins un composé de formule générale (I)
R-C(O)NH-(CH₂)ₐ-N⁺(R¹, R²)-(CH₂)_{b}-COO⁻ (I)
dans laquelle
R est un radical hydrocarboné éventuellement ramifié, contenant une ou plusieurs liaisons multiples et/ou groupes fonctionnels, ayant 6 à 22 atomes de carbone, de préférence 8 à 18 et en particulier 10 à 14 atomes de carbone,
R¹ et R² représentent chacun indépendamment de l'autre un radical alkyle en C₁₋₄, en particulier -CH₃,
a vaut 1 à 5, de préférence 2 ou 3,
b vaut 1 ou 2.

2. Combinaison à activité biologique selon la revendication 1, **caractérisée en ce qu'**on utilise en tant que matière active biocide A) acceptable d'un point de vue agricole, à titre individuel ou en combinaison, des acaracides (AC), des algicides (AL), des attractifs (AT), des répulsifs (RE), des bactéricides (BA), des fongicides (FU), des herbicides (HB), des insecticides (IN), des molluscicides (MO), des nématicides (NE), des rodenticides (RO), des antidotes (SA), des stérilisants (ST), des substances synergiques (SY), des viricides (VI), des régulateurs de croissance (PG).

3. Combinaison à activité biologique selon les revendications 1 à 2, **caractérisée en ce qu'**on utilise en tant que matière active biocide A) acceptable d'un point de vue agricole un composé organophosphoré ou des dérivés de ce dernier.

4. Combinaison à activité biologique synergique selon les revendications 1 à 3, **caractérisée en ce qu'**on utilise en tant que matière active biocide A) du glyphosate ou des dérivés de ce dernier et/ou des sels de ce dernier.

5. Combinaison à activité biologique synergique selon les revendications 1 à 2, **caractérisée en ce qu'**on utilise en tant que matière active biocide A) un fongicide, à titre individuel ou en combinaison.

6. Procédé pour renforcer l'activité de compositions aqueuses biologiquement actives pour applications agricoles, contenant une matière active biocide, acceptable d'un point de vue agricole, éventuellement des additifs et adjuvants usuels et un bioactivateur, **caractérisé en ce qu'**on utilise en tant que bioactivateur, à une concentration efficace, au moins un composé de formule générale (I)
R-C(O)NH-(CH₂)ₐ-N⁺(R¹,R²)-(CH₂)_{b}-COO⁻ (I)
dans laquelle
R est un radical hydrocarboné éventuellement ramifié, contenant une ou plusieurs liaisons multiples et/ou groupes fonctionnels, ayant 6 à 22 atomes de carbone, de préférence 8 à 18 et en particulier 10 à 14 atomes de carbone,
R¹ et R² représentent chacun indépendamment de l'autre un radical alkyle en C₁₋₄, en particulier -CH₃,
a vaut 1 à 5, de préférence 2 ou 3,
b vaut 1 ou 2.

7. Procédé selon la revendication 6, dans lequel la matière active acceptable d'un point de vue agricole est un acaracide (AC), un algicide (AL), un attractif (AT), un répulsif (RE), un bactéricide (BA), un fongicide (FU), un herbicide (HB), un insecticide (IN), un molluscicide (MO), un nématicide (NE), un rodenticide (RO), un antidote (SA), un stérilisant (ST), une substance synergique (SY), un viricide (VI), un régulateur de croissance (PG), ou une combinaison de ceux-ci.

8. Procédé selon les revendications 6 ou 7, dans lequel l'herbicide est choisi dans le groupe des acides organiques phosphorés.

9. Procédé selon l'une des revendications 6 à 8, dans lequel le rapport en poids du bioactivateur à la matière active à activité biocide et acceptable d'un point de vue agricole est de 0,001 à 200 et en particulier de 0,03 à 50.

10. Composition biocide aqueuse stable au stockage présentant une activité biocide améliorée, contenant 0,05 à 50 % en poids d'un biocide choisi dans le groupe consistant en HB, FU, IN, ou PG, et 0,5 à 50 % en poids d'un bioactivateur de formule générale (I)
R-C(O)NH-(CH₂)ₐ-N⁺(R¹,R²)-(CH₂)_{b}-COO⁻ (I)
dans laquelle
R est un radical hydrocarboné éventuellement ramifié, contenant une ou plusieurs liaisons multiples et/ou groupes fonctionnels, ayant 6 à 22 atomes de carbone, de préférence 8 à 18 et en particulier 10 à 14 atomes de carbone,
R¹ et R² représentent chacun indépendamment de l'autre un radical alkyle en C₁₋₄, en particulier -CH₃,
a vaut 1 à 5, de préférence 2 ou 3,
b vaut 1 ou 2.

11. Composition biocide aqueuse selon la revendication 10, **caractérisée en ce qu'**elle contient en tant qu'adjuvants et additifs usuels des sels, des épaississants, des antimousses, des agents chélatants, des régulateurs de pH, compatibles d'un point de vue biocide.

12. Procédé pour le traitement de végétaux, qui comprend l'application, sur les végétaux, d'une composition biocide aqueuse selon les revendications 1 à 5.

13. Procédé pour réguler la croissance d'un végétal, le végétal étant mis en contact avec les compositions selon l'invention, selon les revendications 1 à 5.

14. Procédé selon les revendications 12 et 13, **caractérisé en ce que** la dose de la matière active biocide et du bioactivateur est de 0,01 à 10 kg/ha, en particulier de 0,5 à 5 kg/h.
